# EUROPEAN PATENT APPLICATION

(11) **EP 1 515 264 A2**
(43) Date of publication of application: **16.03.2005**
(21) Application number: 04104163.3
(22) Date of filing: 31.08.2004
(51) Int. Cl.: G06K 15/02, G06F 3/033, G06K 1/12

(54) **Location patterns and method and apparatus for generating such patterns**

(30) Priority: 10.09.2003 US 660323
(71) Applicant: Hewlett-Packard Development Company, L.P., Houston, TX 77070 (US)
(72) Inventor: Nelson, Terry, Boise, ID 83709 (US)
(74) Representative: Leadbetter, Benedict

(57) **Abstract**

A printer system comprising a printer adapted to print a location pattern comprising a plurality of dots, each having a substantially predetermined size and nominal position in the pattern, the printer having a resolution constraining the position at which the dots may be printed, the system being adapted to modify at least some of the dots prior to printing such that the modified dots have an optical centre of gravity that more closely coincides with their nominal positions.

## Description

### FIELD OF THE INVENTION

This invention relates to location patterns, typically printed on a document and typically used to allow the position of a device such as a pen to be determined relative to the pattern, and to methods and apparatus for generating such patterns.

### BACKGROUND TO THE INVENTION

The invention arose out of a consideration of the work of Anoto™ Group AB and others in relation to digital pattern paper and digital pens. It is convenient to discuss the invention in that contextual background, but it will be appreciated that the invention is not restricted to use with any proprietary system.

The prior art Anoto digital pen and paper system is described on their website www.anotofunctionality.com. However, since the content of websites can change with time it is to be made clear that the prior art admitted is that which was published on their website no later than the day before the priority date of this patent application. It is also appropriate to include in this application itself a brief review of the Anoto system.

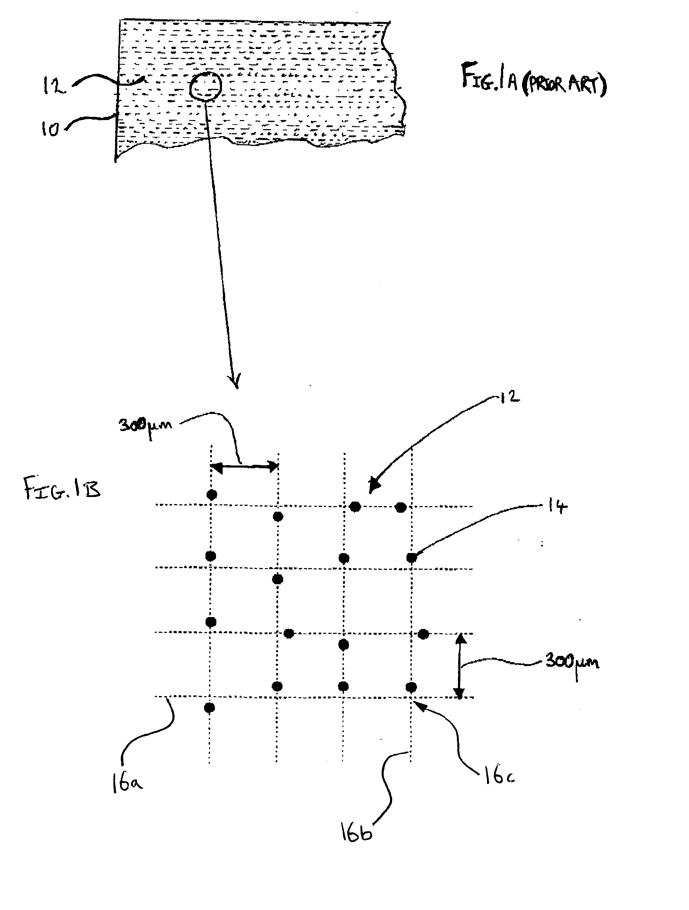

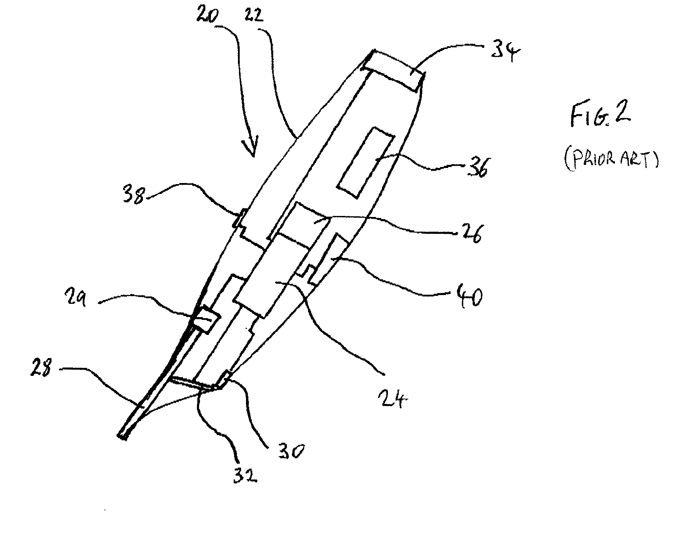

Figure 1a shows schematically part of an A4 sheet 10 of Anoto digital paper. The sheet 10 has printed on it a part of a very large non-repeating pattern 12 of dots 14. The dots 14 of the pattern 12 are printed using infra-red absorbing black ink. The dots give the sheet 12 a pale grey appearance. An enlarged view of a small area of the pattern 12 is illustrated in Figure 1b.

As is shown in the Figure 1b, the position identifying pattern 12 is made up of a number of dots 14 arranged on an imaginary square grid 16. The grid 16 can be considered as being made up of horizontal and vertical lines 16a, 16b defining a number of grid squares of side length 300µm, together with a number of intersections 16c where horizontal and vertical lines cross. One dot 14 is provided at each intersection 16c, but offset slightly in one of four possible directions up, down, left or right, from the actual intersection 16c. The dot offsets are arranged to vary in a systematic way so that the pattern formed by any group of a sufficient number of dots, for example a group of 36 dots arranged in a six by six square, will be unique within a very large area of the pattern. An example of this type of pattern is described in WO 01 /26033.

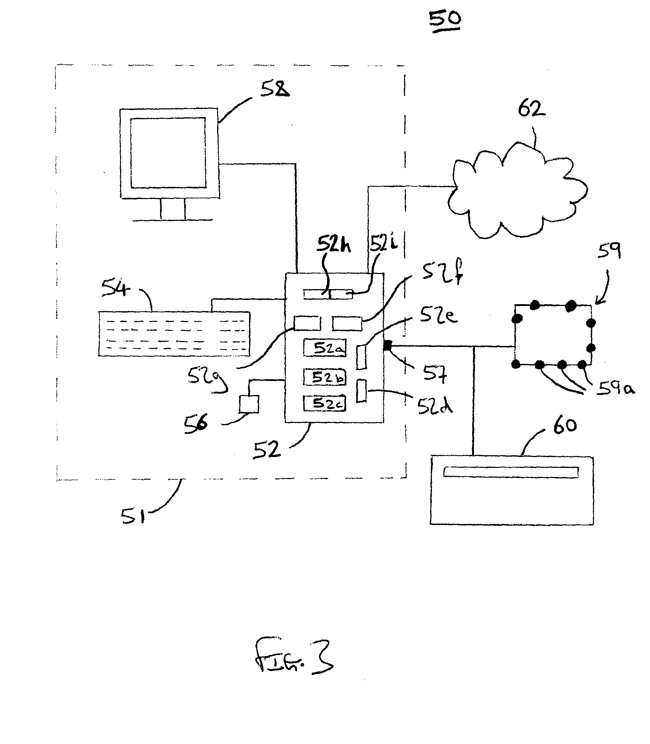

Figure 2 schematically shows a digital pen 20 adapted to write human readable ink in non-machine-readable IR transparent ink and to read a position dot pattern in infra-red. The pen 20 has a housing 22, a processor 24 with access to memory 26, a removable and replaceable ink nib and cartridge unit 28, a pressure sensor 29 adapted to be able to identify when the nib is pressed against a document, an infra-red LED emitter 30 adapted to emit infra-red light of a specified wavelength, an infra-red sensitive camera 32 (e.g. a CCD or CMOS sensor), a wireless telecommunications transceiver 34, and a removable and replaceable battery 36. Such a pen exists today and is available from Anoto as the Logitech IO™ pen.

The pen 20, when in use writing or marking the page 10, images a 6x6 array of dots 14. The pen's processor 24 establishes its position in the dot pattern 12 from that image. The processor 24 processes data acquired by the camera 32 and the transceiver 34 communicates processed information from the processor 24 to a remote complementary transceiver (e.g. to a receiver linked to a PC). Typically that information will include information related to where in the dot pattern the pen is, or has been, and its pattern of movement.

Anoto intend that their digital paper, offset-printed with dot pattern, either over the whole of its surface or over selected regions, be available from specially registered printing companies who know the technologies necessary to achieve good results. End users must buy their paper pre-printed with machine-readable position dot pattern and pre-printed with human readable content (e.g. text, or pictures, or lines, or boxes or frames etc).

This is to avoid problems. One problem avoided by such a system is that of users who design their own forms or documents, printing human-discernable or readable content over the dot pattern with the wrong ink (ink that is IR-absorbing ink), thereby masking the dot pattern from the digital pen, when the pen is used.

Another problem avoided by such a system is that of the digital pattern 12 being printed with characteristics that are different to those required for it to be read by the pen 20. In the Anoto system, as in other digital paper systems, the relative positions and sizes of the elements of the pattern are controlled to be within pre-set tolerances. In this manner, a pattern may be printed which conforms to the specifications of the system and which is suitable for use with the pen. In the case of the Anoto system, for example, examples of elements of the pattern that are controlled to be within pre-set tolerances include: the spacing between adjacent parallel lines of the grid 16; the distance by which the dots 14 are offset from their corresponding grid intersections 16c; and, the diameter of the dots 14. Many printers have technical characteristics which render them unable to reliably print the elements of such a pattern, such that the relative positions and the sizes of the pattern elements meet the pre-set tolerances. Many existing home and office printers, for example, are unable to reliably do so. For this reason, Anoto intend that the digital pattern 12 is printed using offset printers, which are able to print it with sufficient quality and with sufficient resolution in order that it may be read by the pen without error.

### SUMMARY OF THE INVENTION

According to a first aspect of the invention, there is provided a printer system comprising a printer adapted to print a location pattern comprising a plurality of dots, each having a substantially predetermined size and nominal position in the pattern, the printer having a resolution constraining the position at which the dots may be printed, the system being adapted to modify at least some of the dots prior to printing such that the modified dots have an optical centre of gravity that more closely coincides with their nominal positions.

The present invention also extends to: software and a printer driver for generating such a location pattern; and, corresponding methods for generating or printing such location patterns; as defined in the appended claims.

### BRIEF DESCRIPTION OF THE DRAWINGS

For a better understanding of the invention and to show how the same may be carried into effect, there will now be described by way of example only, specific embodiments, methods and processes according to the present invention with reference to the accompanying drawings in which:
Figure 1a shows schematically a sheet of Anoto digital paper;
Figure 1b shows schematically an enlarged portion of the sheet illustrated in Figure 1a;
Figure 2 shows schematically a known digital pen;
Figure 3 shows schematically a system for creating and printing a digital document according to one embodiment of the invention;
Figure 4a is a flow diagram showing a method of designing an electronic document according to an embodiment of the present invention;
Figure 4b is a flow diagram showing a method of generating a digital pattern and digital document according to an embodiment of the present invention;
Figures 5a and 5b schematically illustrate exemplary digital documents printed according to embodiments of the present invention;
Figure 6a is a schematic illustration of dots forming part of a digital pattern printed using a conventional laser printing process;
Figures 6b-e are schematic illustrations of dots forming part of a digital pattern printed using a printing process according to embodiments of the present invention; and,
Figures 7a and 7b show enlarged views of an individual dot shown in Figures 6b and 6c, respectively.

### DETAILED DESCRIPTION OF THE INVENTION

There will now be described, by way of example only, the best mode contemplated by the inventors for carrying out embodiments of the invention.

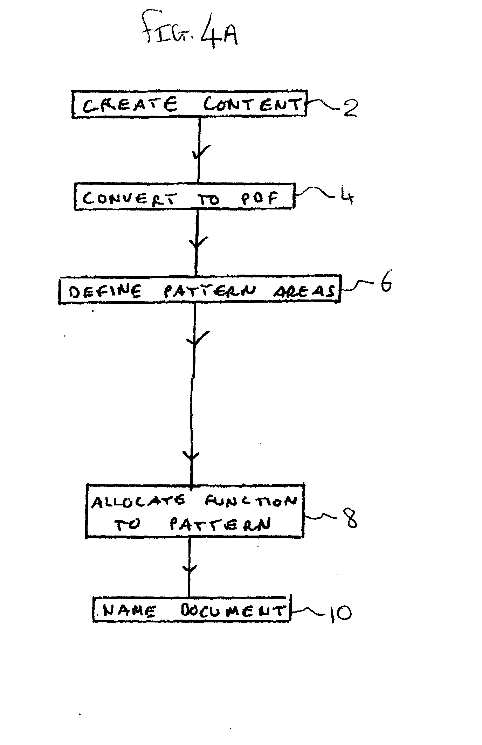

Figure 3 is a schematic illustration of a system 50 for printing a document having a pattern, according to an embodiment of the invention.

The system 50 comprises a workstation 51 including a personal computer (PC) 52 which is connected to a local printer 60. In practice, the printer may instead be connected to the PC 52 via a network. The PC 52 may also be connected to the Internet 62. The PC 52 includes a user interface including a screen 58, a keyboard 54 and a mouse 56. The PC 52 has as a processor 52a, a memory 52b, and I/O software devices 52c by means of which the processor communicates with the screen 58, the keyboard 54 and the mouse 56 and a communications port 57 by means of which it communicates with the Internet 62 or a local network such as a LAN 59 having peripheral devices and/or other computers (e.g. PCs) 59a.

The workstation 51 has access to a database 52d of pattern data for use with Anoto-type digital documents. The database 52d may also have user names and identification numbers, which are in use associated with each particular document at the time of printing of the document and which may be printed out with the document. This database 52d may be on the PC or elsewhere on a network, for example on a local file server or on the Internet. This may take the form of a digital pattern space allocation server as is used in the Anoto system. The PC 52 also includes a software tool, known as a Print-on-Demand (PoD) tool, referenced 52e the figure. The PoD tool 52e has access to the database 52d of pattern data, as is described in more detail below.

The PC 52 is arranged to generate electronic digital documents that comprise a pattern 12 of dots 14. The digital documents may be "Anoto-type" digital documents. However, it will be appreciated that the invention is not restricted to use with any proprietary system.

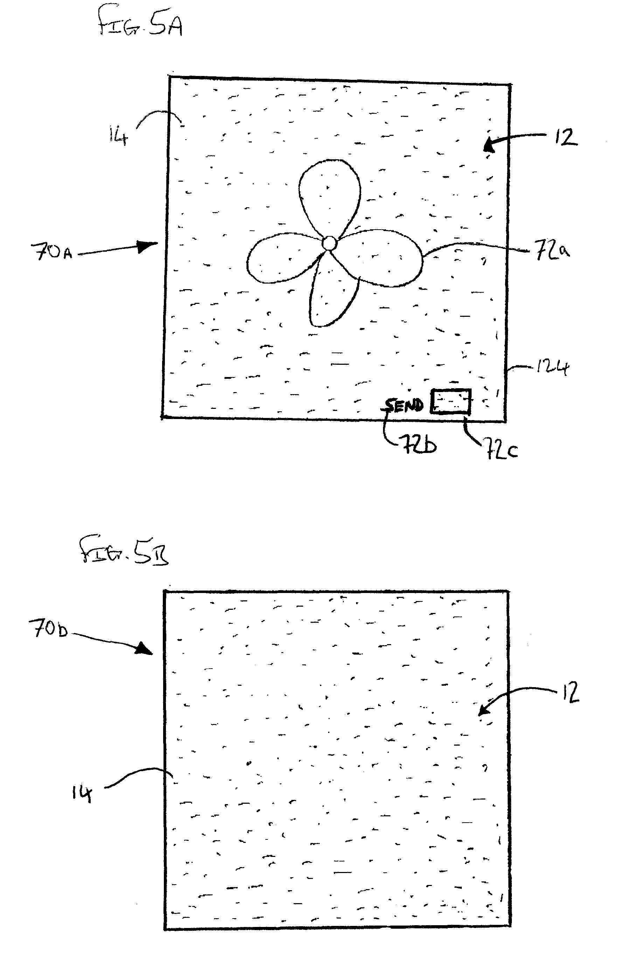

In certain embodiments of the invention, the digital documents may be printed such that they have both a pattern 12 of dots 14 and human-discernable content. The human-discernable content may include amongst other things include text, graphics and check boxes, for example. Figure 5a illustrates schematically a hard (paper) copy of such a digital document. The hard copy comprises a carrier 70a in the form of a single sheet of A4 paper, with the machine-readable pattern 12 of dots 14 printed on it. In this example, the user has defined the pattern area to cover the entire area of the carrier 70a, as can be seen from the figure. Also printed on the paper 70a are further markings 72a-c, which are clearly visible to a human user of the form, and which make up the human-discernable content of the document. In the example illustrated the content is made up of a schematic image of a flower 72a, the word "SEND" 72b and a check box 72c. The nature and amount of the content will depend entirely on the intended use of the document.

Such digital documents may be used for specific functions, such as questionnaires or forms, for example. Suitable techniques for simultaneously printing a digital pattern and human-discernable content on printers, such as inkjet and laser printers, are more fully described in the co-pending British patent application No. 0321164.6, incorporated by reference herein, entitled "Methods, apparatus and software for printing location pattern", (Hewlett-Packard reference 200300566-1; Attorney docket JL3824).

In certain methods of the invention, the digital documents are printed with no, or substantially no human-discernable content. Thus, the resultant printed digital documents in such methods are suitable for a wide variety of uses by a user; i.e. they may be used as the digital equivalent of blank notepaper. Figure 5b illustrates schematically a hard (paper) copy of such a digital document. The hard copy again comprises a carrier 70b in the form of a single sheet of A4 paper, with the machine-readable pattern 12 of dots 14 printed on it. In this example, the user has defined the pattern area to cover the entire area of the carrier 70b, as can be seen from the figure. As can be seen from the figure, there are no markings printed on the paper 70b, for human use.

The user interface of the PC 52 allows a user to the view electronic versions of digital documents to be printed, using a conventional software viewer application, referenced 52f in Figure 3, on the screen 58. An already existing, previously designed document may be accessed from a database of such documents for printing. Alternatively, a new document may be designed by the user. The user may make modifications to the digital documents prior to printing them should this be required. Such changes may include modifying any human-discernable content that may be present in the document or modifying the area or areas, in terms of size or shape for example, on the digital document that are to have digital pattern applied to them. This may be achieved through the user interface, which includes the keyboard 54 and mouse 56 and software (not shown) for processing inputs from them, as well as the screen 58 and software 52g for producing the content, e.g. images and/or text, on the screen.

Techniques for allowing a user to modify and print, on demand, documents which have position identifying pattern on them for use with a digital pen and paper system are more fully described co-pending British patent application No. 0321168.7, incorporated by reference herein, entitled "Printing of documents with position identification pattern", (Hewlett-Packard reference 200310132-1; Attorney docket ASW1329).

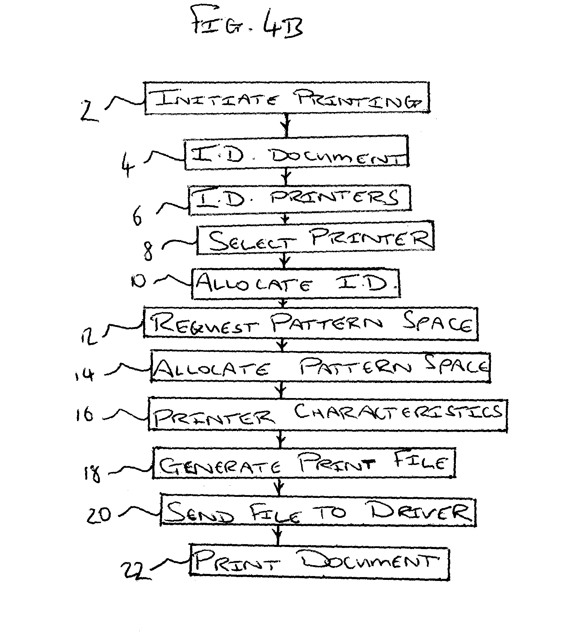

Figure 4a is a flow diagram showing an exemplary method of designing a generic electronic digital document suitable for use with embodiments of the present invention. The method starts at step 2 with the design of the human-discernable content of the document. The design work is carried out on the PC using a software application. The application may, for example, be Acrobat Reader or a word processing package such as 'Word', a database package such as 'Access', or a spreadsheet package such as 'Excel'. Each of these applications may be used to design the content of the document. The content is converted to PDF format at step 4. It will be understood that in the event that no human-discernable content is incorporated into the documents, the steps 2 and 4 may be omitted from the method.

The machine-readable pattern areas of the document are then defined at step 6. In this case this is carried out using a form design tool (FDT) 52h, shown in Figure 3, which in the present embodiment is in the form of an Acrobat 5.0 plug-in. In one simple case, the machine-readable pattern area of the document may be the entire page; which may be a single A4 sheet for example. This may even be set as the default setting at this step.

At step 8 the user allocates any desired computer-implemented functions to one or more areas of pattern in the document. In this manner, such a pattern area may code for instructions to perform the associated function. For example, a "send" function may be designated by a user to the pattern area associated with the box 72c of the document 70a shown in Figure 5a, for example. In this way, when the pen is used to check the box 72c, the system knows that the updating of the document 70a is complete. In one simple case, such a document need have no such computer-implemented functions.

At step 10 a name is given to the document.

Once the user is happy with the design of the digital document, it may be printed out.

The process of printing a document according to the present embodiment, including the generation of a modified position identifying pattern will now be described with reference to the flow diagram in Figure 4b. In this example, a digital document consisting of single sheet of A4 is printed. For the purposes of clarity, this exemplary document has no human-discernable content and has a machine-readable pattern of dots printed over its entire surface, such as is illustrated in Figure 5b.

At step 2, the user initiates the printing process, by selecting a printing option on a user interface (UI) (not shown). This causes the PoD tool, referenced as 52e in Figure 3, to open a printing UI in a conventional manner. Using the printing UI the user requests the number of prints and various other printing parameters (e.g. whether the printed document is to be in colour or black and white, etc.). At step 4, the PoD tool 52e identifies from the document file name that the document is a document having a position identifying pattern on it. The PoD tool 52e then identifies those printers on the network which the user may select to print the print job, at step 6. In the present example, this includes the printer 60. The user selects the printer 60 and initiates the print operation, in a conventional manner, at step 8.

In the present embodiment, the printer 60 is a conventional laser printer with a resolution of 600dpi, such as is conventionally used in office environments. However, in other embodiments of the invention other types of printer may be used. These may include inkjet printers, LED printers, LCD printers, Liquid Electrophotographic Printers. Photocopiers can also be considered as printers. The difference between an electrostatic, toner-based, photocopier and a laser printer is not significant for many aspects of the invention. Indeed, it is not uncommon for computers, e.g. PCs to be configured to print from photocopiers.

Once the actual print is initiated, the PoD tool 52f allocates a unique instance ID to the printed document, at step 10. It then requests the required amount of pattern space from the database 52d of pattern data, at step 12, providing the document name and instance ID. In the current example, the requested pattern area is sufficient to cover substantially all of the document, in this example a sheet of A4 paper, as stated above. For other examples, only some areas of the document will need to be allocated a digital pattern.

An area of pattern is allocated at step 14 to the document from a virtual pattern space stored in the database 52d. In the present example, the PoD tool 52e receives back from the database 52d a definition of the pattern space allocated. In the present embodiment, this is in the form of a co-ordinate reference within the total pattern space. This may take the form of, for example, upper left and lower right co-ordinates of the allocated area in the pattern space. The workstation 51 is then able to re-create the dot pattern in the allocated area from that information in a conventional manner. In other embodiments, a full definition of the actual pattern to be used may be transmitted from the database 52d to the PoD tool 52e. Such a full definition may take the form of co-ordinate positions, for example, of each dot in the allocated area.

At this stage, it will be appreciated that the definition of the dot pattern contains the nominal, or ideal positions of the dots which lie in the allocated pattern space. Furthermore, the size and form of the individual dots in the allocated pattern space are defined only by the specification of the system. In the case of the Anoto system, for example, the dots are circular with a diameter of approximately 100µm.

The PoD tool 52e then obtains, at step 16, data relating to the printing characteristics of the selected printer; printer 60. In the present embodiment, this information is stored locally with respect to the workstation 51, in the memory 52b of the PC 52. In other embodiments, however, this information may be stored on a server connected to a network such as a LAN or the Internet 62. The printing characteristics data informs the PoD tool 52e that the printer 60 should print a digital pattern with modified dots, or with a modified dot shape, in order that the printed pattern may be more reliably read by the pen 20. The printing characteristics data also defines the modified dot shape for use with the digital pattern. Furthermore, the printing characteristics data also defines the position(s) and orientation(s) of the modified dot shape with respect to one or more exemplary virtual grid intersection 16c. This information may be used, when generating the digital pattern, to ensure that each of the modified dots in the pattern is correctly positioned and orientated with respect to its corresponding virtual intersection 16c. In this manner, it may be ensured that the pattern may be reliably read by the pen. This definition, in the present embodiment, is given in the native resolution of the printer 60 and is employed when printing the document with the printer 60.

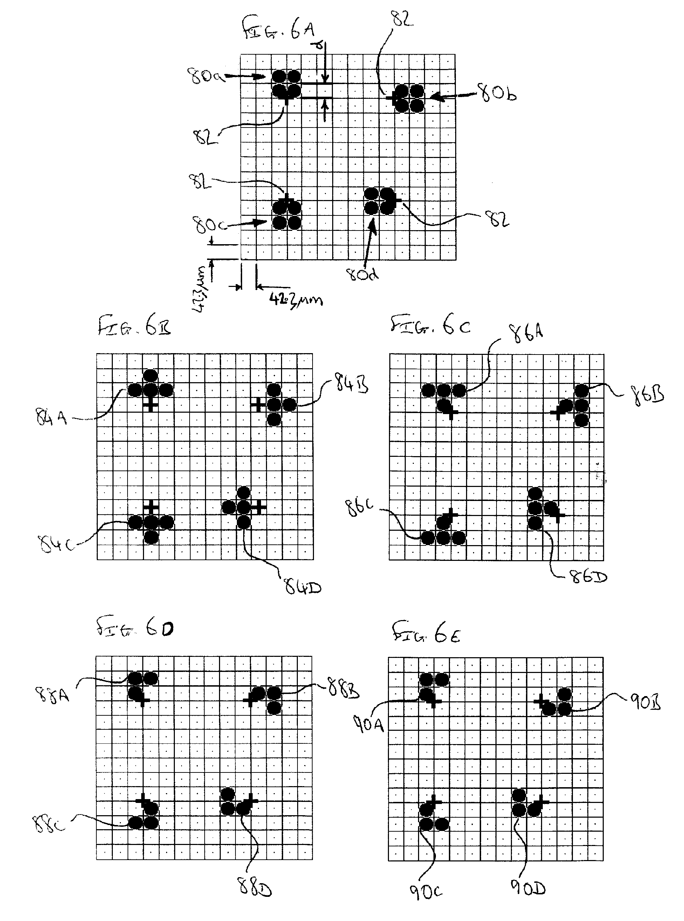

Referring now to Figure 6 various exemplary parts of digital dot patterns are illustrated. In Figure 6a, four dots 80a-d forming an exemplary part of a digital pattern, printed in a conventional manner with a digital printer of 600dpi resolution, are illustrated. In the figure, the position of the intersections of the imaginary gridlines are indicated by crosses 82. As can be seen from the figure, the dots 80a-d are located, respectively above, to the right, below and to the left of their adjacent or corresponding crosses 82. The figure is shown, for ease of explanation, against an imaginary background grid. Each of the individual squares making up the grid represent the smallest individual unit of addressable printable area; i.e. the smallest individual unit of area which may be printed by the printer 60. Thus, the grid represents the native resolution of the printer. Thus, each of the pixels which may be printed by the printer 60 substantially fills a given square. It will thus be understood that since the native resolution of the printer 60 is 600dpi, the length of each of the individual squares making up the grid is 42.3µm. Similarly, the diameter of each pixel it prints is approximately 42µm. It can thus be seen that crosses 82 are separated by their immediate neighbours in the horizontal and vertical directions by 7 individual squares. This equates to 296.3µm, which is approximately equal to the 300µm as used in the Anoto system.

In this example, using conventional digital printing techniques, the circular dot shape is approximated by a 2 by 2 pixel array, as can be seen in the case of each of the dots 80a-d. Thus, the minimum diameter of each of the dots 80a-d is approximately 2 x 42µm, which gives a diameter of approximately 84µm.

It has been found by the inventors in experimentation with a range of laser printers that in the absence of other errors, printed digital patterns having a separation distance between adjacent parallel lines of the grid 16 (i.e. the distance separating the crosses 82 from their immediate neighbours in the horizontal and vertical directions) of 296.3µm, may be read by the pen 20 in a reliable manner. Furthermore, it has also been found by the inventors in experimentation with a range of laser printers that in the absence of other errors, printed digital patterns, having dots with a minimum diameter of approximately 84µm, such as dots 80a-d, may be read by the pen 20 in a reliable manner.

It will be recalled that "dot offset distance" is the distance separating the optical centre of gravity of a given dot from the its adjacent gridline intersection point. It will be understood that the optical centre of gravity of a 2x2 pixel array, such as any one of dots 80a-d, lies at the centre of the 2x2 pixel array. Thus, the "dot offset distance" for dot 80a, for example, is referenced "d" in the figure. As can be seen from the figure, the "dot offset distance" is equal to the width of one individual squares making up the grid; i.e. 42.3µm.

It has been found in experimentation by the inventors that digital patterns, printed with a range of laser printers, which have a "dot offset distances" equal to 42.3µm, such as that of Figure 6a, may not be read by the pen 20 in a reliable manner. It has been found that this "dot offset distance" is too small to comply with the pre-set tolerances of the system. Consequently, digital pattern which is printed with such a "dot offset distance" does not conform to the specifications of the system. Thus, due to the resolution limitations of the printers, a digital dot pattern may not be reliably read by a pen 20, when it is printed by such printers, using conventional techniques.

Furthermore, it has been found by the inventors that if the "dot offset distance" is increased, the resultant pattern still may not be reliably read by a pen 20. Due to the resolution constraints of such printers, printed pattern with increased "dot offset distance" also does not conform to the specifications of the system; this time because the increased "dot offset distance" is too large. Alternatively, other aspects of the pattern are found to be forced outside the range of pre-set tolerances of the system. Thus, the result is similar; namely, that the resultant printed pattern does not conform to the specifications of the system, and is not reliably read by the pen 20.

Referring now to Figures 6b-6e, exemplary sets of dots, each forming part of a digital pattern with a modified dot shape according to embodiments of the present invention, are illustrated. In each of the Figures 6b-6e, four dots are illustrated adjacent the intersection points of imaginary gridlines. These intersection points are again indicated by crosses, as was the case in Figure 6a. In each of the figures, each dot occupies a different position (i.e. above, to the right, to the below and to the left) relative to its corresponding cross, as was the case in Figure 6a. Additionally, as was also the case in Figure 6a, each of the Figures 6b-6e is shown, for ease of explanation, against a background grid, where each individual square of the background grid represents the smallest individual unit of area which may be printed by the printer 60. The length of the sides of each of the individual squares of the grids shown in Figures 6b-6e is again 42.3µm.

It will be understood by the skilled reader that the representations of dot patterns illustrated in Figures 6b-e are schematic, or idealised illustrations. These schematic illustrations may most closely resemble a raster image or bit map of the dots prior to being printed. This may be as generated in application software, such as the PoD tool 52e, or as in the data processed by the printer driver (referenced 52i in Figure 3), prior to being sent to the printer 60. It will of course be appreciated that when the dots are in fact printed, the printed shape of a dot may vary somewhat from the schematic shapes illustrated. This may be due to several factors. One of these is due to imperfections of the print engine, which causes its printed output to be only an approximation of the pre-printed image.

Referring now to Figure 6b, it can be seen that the dot 84c is made up of four pixels, in the form of a capital "T". The remaining dots 84a, 84b and 84d have the same size and shape as the dot 84c (i.e. have the same number and configuration of pixels) but are each but are located at a different orientation relative to their adjacent crosses 82. It will in fact be clear to the skilled reader that rotating the dot 84c, +90, 180 and +270 degrees about its adjacent cross yields the orientational and positional relationship of dots 84d, 84a and 84b, respectively, relative to their respective adjacent crosses.

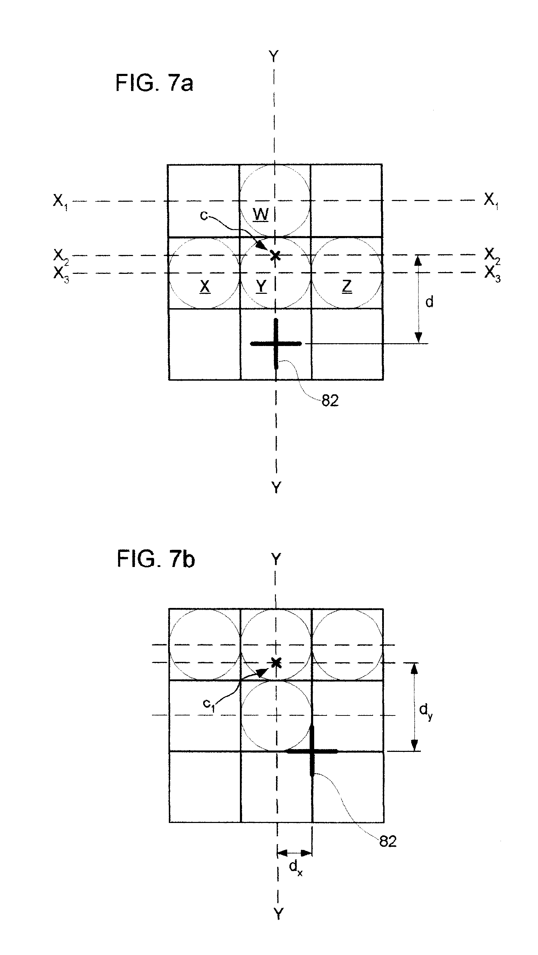

Referring now to Figure 7a, an enlarged view of the dot 84a, is shown. The individual pixels forming the dot are referenced W, X, Y and Z. It may be immediately seen from this figure that the optical centre of gravity of the group of pixels X, Y and Z lies at the intersection of the line Y-Y, which passes through the corresponding cross 82, and line X₃-X₃, lying perpendicular to line Y-Y. Similarly, it may be seen that the optical centre of gravity of the pixel W lies at the intersection of the lines Y-Y and X₁-X₁. Simple ratios show that the optical centre of gravity of the whole dot, including pixels W, X, Y and Z lies on the intersection between the lines Y-Y and X₂-X₂, which lies parallel to and between the lines X₁-X₁ and X₂-X₂; where, the distance separating the lines X₂-X₂ and X₃-X₃ is one third that separating the lines X₂-X₂ and X₁-X₁.

The optical centre of gravity of the dot 84a is therefore indicated at point "C". Its distance from the centre of the cross 82 is given by the distance "d", which is equal to 1.25 of the length of an individual square of the grid shown in Figures 6b-6d; i.e. 1.25 x 42.3µm, which equals 52.9µm. This distance is of course the "dot offset distance". It will be understood that the same value for the "dot offset distance" is obtained in the case of each of the remaining dots 84b, 84c and 84d. It has been found that the modified dot pattern indicated in Figure 6b with the "dot offset distance" of 52.9µm results in printed pattern that may be reliably read by the pen 20. Thus, it will be understood that using the modified dot shape of Figure 6b, the "dot offset distance" may be brought within the tolerances of the system. In this manner, a printed digital pattern that conforms to the specifications of the system may be printed with a printer such as printer 60.

Figure 6c, shows an alternative dot pattern. In this dot pattern, dots 86a-d of the same shape and size as described with reference to Figure 6b are employed.

In this case, rotating the dot 86a 180 degrees about its adjacent cross yields the orientational and positional relationship of dot 86b relative to its adjacent cross. The pair of dots 86c and 86d have a similar rotative relationship relative to their adjacent crosses. However, it will be noted that this is not the case between other pairings of these four dots, which have reflective or a combination of rotative and reflective relationships regarding their orientation and position relative to their adjacent crosses.

As can be seen from the figure, the positions and orientations of a given dot in the pattern shown in Figure 6c differs from the corresponding dot shown in the Figure 6b. Taking for example the dot 86c, which is located offset below its cross. This dot is inverted relative to the corresponding dot, dot 84c, of figure 6b which is located offset below its cross. Alternatively, this may be view as the stem of the "T" of dots 86a and 86c are directed towards their respective, adjacent crosses, whereas the opposite is true in the case of the dots 84a and 84c. Furthermore, whereas the dot 84c is located so as to be symmetrical about the line Y-Y (shown in Figure 7a) which passes through its adjacent cross, the dot 86c is offset not only below its adjacent cross, but also somewhat to the left, as viewed in the image.

An enlarged view of the dot 86a, is shown in Figure 7b. This is illustrated in the same manner that the dot 84a was illustrated in Figure 7a. The optical centre of gravity of the dot 86a is illustrated by the cross referenced "C₁". This may be determined in the same manner as was used with reference to Figure 7a. As can be seen from Figure 7b, optical centre of gravity of the dot 86a is again located 1.25 of the length of an individual square of the grid shown in Figures 6b-6d from the cross 82 in the direction Y-Y; i.e. 52.9µm. Again as stated above, it has been found that "dot offset distance" of 52.9µm results in printed pattern that may be reliably read by the pen 20 when printed with a printer such as printer 60.

It will be noted, however, that the optical centre of gravity of the dot 86a is also located a distance "dₓ" offset in a direction perpendicular to the direction Y-Y; to the left of its cross, as viewed in the figure.

The distance "dₓ" in this case is half of the length of an individual square of the grid shown in Figures 6b-6d; i.e. 21.2µm. In practice however, this offset distance "dₓ", in a secondary direction, has been found to be acceptable for use with the Anoto system in the case of this dot pattern.

Figure 6d, shows a further alternative dot pattern. In this dot pattern, dots 88a-d consisting of three pixels arranged in an "L" shape are used. The dots in this dots pattern have the same rotative, positional and orientational relationship relative to their adjacent crosses as do the dots in the pattern shown in Figure 6b. Like the dot pattern of Figure 6c, however, the optical centre of gravity of each of the dots 88a-d is offset from its corresponding cross, in both a primary direction and a secondary direction. Like the pattern of Figure 6c, though, the dot pattern of Figure 6d has been found to work well with the pen 20 when printed using a 600dpi laser printer.

Figure 6e, shows a further alternative dot pattern. This dot pattern resembles the dot pattern shown in Figure 6d in that dots 90a-d consisting of three pixels arranged in an "L" shape are used. Like the dot patterns of shown in Figures 6c and 6d, the optical centre of gravity of each of the dots 90a-d is offset from its adjacent cross, in both a primary direction and a secondary direction. Additionally, however, the dots 90a-d have similar orientational and positional relationships, relative to their adjacent crosses, as is the case with the dots making up the dot pattern illustrated in Figure 6c. Again, the dot pattern of Figure 6e has been found to work well with the pen 20 when printed using a 600dpi laser printer.

It has been found that for printers which benefit from the use of a digital pattern with a modified dot shape, the exact characteristics of the dots (including their shape size and orientations) which is most beneficial vary with the individual printer concerned. Thus, for a given printer the dot characteristics that are used may be determined by experimentation. Furthermore, it will be understood that the example dot types given in figures 6b-e have been found to work well with various widely used types of home and office printers. However, the use of dots, with a differently modified combination of shape, size and orientation may be preferable for use with other printers. Such dot may, for example, use: a different number of pixels per dot to those shown in figures 6b-e; one or more differently shaped dots; dots of a shape different to those given in figures 6b-e; or, different aspects of the patterns given in figures 6b-e.

Returning now to the Figure 4b, it will thus be understood that any one of the patterns of modified dots illustrated in Figures 6b-e, or indeed a further pattern of modified dots may be specified in the printing characteristics of the printer 60 obtained at step 16 of Figure 4b.

At step 18 of Figure 4b, the PoD tool 52e in conjunction with the workstation 51 re-creates the dot pattern which is to be printed, using the modified dot shape pattern, obtained at step 16, and converts this into a print file ready for printing in a conventional manner. In the present embodiment, the dot pattern which is to be printed is recreated as a bit map, although any other suitable format may instead be used.

At step 20, the print file is then converted into a language that can be understood by the printer driver 52i (illustrated in Figure 3) associated with the workstation 51 and is sent to the printer driver 52i. Examples of a suitable language are PCL5 or Postscript. However, other languages may instead be used.

At step 22, the print file is sent to the printer 60, where the document is printed.

In the present example, the printer 60 may be a monochrome printer, which typically prints in black ink. Alternatively, it may be a colour printer, typically printing in black and three complementary colour inks. In either case, the digital pattern is printed in the present embodiment using an ink that absorbs light at a non-visible wavelength of light, such that the dots may be read by the pen 20. It will be understood that the term "ink" is meant to include liquid inks, and powder inks (e.g. toner that needs heat to fuse to a page/surface) and gels: it is not used in a sense to restrict its physical form.

As is well understood in the art, human-discernable content normally undergoes a half-toning and masking operation prior to printing in order to determine what content, if any, is printed at each pixel of the printing operation. However, it will be understood that the digital pattern may bypass a half-toning operation. In the present embodiment, the pixels of the digital pattern may either be "on" or "off", with no shades of intensity between those extremes. The digital pattern data may be sent from a colour separation stage directly to a masking stage, or even directly to the printer.

It will also be appreciated that where the digital document is to be printed on the same carrier as human-discernible content, it may be desirable to use inks with different characteristics. For example, the digital pattern may be printed using an ink that absorbs IR radiation and the human-discernable content may be printed using human readable, IR transparent ink. In this manner, the risk of the human-discernable content obscuring or masking the digital pattern may be avoided.

In one such embodiment of the invention, a four-colour laser or inkjet printer may be used. The digital patter is printed using an infra-red absorbing black ink. The human-discernable content is printed using cyan, magenta and yellow inks that are not infra-red absorbing. In this embodiment, the black ink channel is processed separately from the cyan, magenta and yellow channels. In this manner, the human-discernable content and the digital pattern may be maintained separate. This and other methods of simultaneously printing human-discernable content and the digital pattern with laser and other types of printers are more fully described co-pending British patent application No 0321164.6, incorporated by reference herein, entitled "Methods, apparatus and software for printing location pattern", (Hewlett-Packard reference 200300566-1 ; Attorney docket JL3824).

It will thus be understood that embodiments of the present invention may be used to permit printers which may otherwise not be able to print a digital pattern sufficiently accurately to be correctly read, by employing dots of a shape which modifies the optical centre of gravity of each dot. In this way, an apparent lack of printer resolution may be compensated for. It will be understood that embodiments of the present invention may be particularly useful in allowing existing printers to be successfully used with such digital pattern systems.

### FURTHER EMBODIMENTS

In the above description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

For example, although in the above-described embodiment, the characteristics of the modified dots were defined in a bit map, the skilled reader will appreciate that in other embodiments of the invention, this need not be the case. The dots or other position determining markings according embodiments of the present invention may be defined using any suitable method that explicitly defines, in the printer's native resolution, the pixels which are to be used in order to print the dots or the position determining markings. For example, this may be achieved using a font set or a high level programming language.

For example, the skilled reader will appreciate that in some embodiments of the invention, the variable which is used to modify the characteristics of the dots that make up the digital pattern need not be, or need not be only the resolution of the printer. Other factors which affect the optical appearance of such dots, and the way in which they are read by a reader such as the pen 20, may include the media type being used. For example, whether the media is glossy or matt, recycled or not recycled, or indeed whether the media is made from non-paper based material, such as acetate. Additionally, the ink characteristics of the printer being used may also affect the appearance of the digital pattern, and the way in which they are read by a reader such as the pen 20. For example, in the case of a laser printer, different levels of toner density will change the appearance of the dots of the dot pattern. Alternatively, the colour with which the dots are printed will also change their appearance. It will be understood that different levels of grey, in the case of a black, monochrome pattern will have this effect. Additionally, a change in the hue of the colour will likewise have such an effect. For example, such a pattern may be more visually pleasing, or indeed may be more easily read by a pen, depending upon the colour and material of the carrier, if it is printed in any one of a range of non-grey colours, such as blue, yellow or red.

It will thus be understood that, for any given digital paper system, operating under given conditions (which may include paper type, ink characteristics, printer resolution etc), a digital pattern with preferred modified dot characteristics (including one or more of shape, size and orientation) may be determined using conventional experimental techniques. A number of such operating conditions may be stored in a look up table in the memory of a workstation, such as workstation 51 for example, together with their corresponding preferred modified dot characteristics. When the user prints a digital document in such an embodiment, he may select via a conventional UI the operating conditions that match, or most closely match the current operating conditions of his system. In this manner, he may reduce the likelihood that the subsequently printed digital pattern will not be correctly readable.

It will of course be understood that other position identifying patterns may equally be used in conjunction with embodiments of the present invention. Some examples of other suitable patterns are described in WO 00/73983 and WO 01/71643.

## Claims

1. A printer system comprising a printer adapted to print a location pattern comprising a plurality of dots, each having a substantially predetermined size and nominal position in the pattern, the printer having a resolution constraining the position at which the dots may be printed, the system being adapted to modify at least some of the dots prior to printing such that the optical centre of gravity of the modified dots more closely coincides with their nominal positions.

2. A system according to claim 1, arranged to modify some of the dots prior to printing by changing shape of those dots from a nominal shape.

3. A system according to claim 1 or claim 2, arranged to modify some of the dots prior to printing by introducing an asymmetry into the shape of those dots.

4. A system according to any preceding claim, wherein the modification substantially does not alter the size of the dots.

5. A system according to any preceding claim, wherein the modified dot shape is substantially an "L" shape or substantially a "T" shape.

6. A system according to any preceding claim, wherein the nominal position of each dot of the pattern lies offset in one of a plurality of directions, such as above, below, to the left and to the right, from the intersection point of a virtual grid.

7. A system according to claim 6, wherein the modification of the dots has the effect of moving the optical centre of gravity of those dots in a first direction, towards or away from their nominal positions.

8. A system according to claim 7, wherein the modification of the dots has the additional effect of moving the optical centre of gravity of those dots in a second direction, perpendicular to the first direction.

9. A system according to claim 7 or claim 8, wherein dots offset from intersection points of a virtual grid in a first direction have a different shape and/or size compared to dots offset from intersection points of a virtual grid in a second direction.

10. A system according to claim 7 or claim 8, wherein dots offset from intersection points of a virtual grid in a first direction have the same shape and/or size as dots offset from intersection points of a virtual grid in a second direction.

11. A system according to claim 10, wherein dots offset in the first direction are rotations of dots offset in the second direction.

12. A system according to claim 11, wherein dots offset in the first direction are reflections of dots offset in the second direction.

13. A system according to claim 12, wherein dots offset in the first direction are combined rotations and reflections of dots offset in the second direction.

14. A system according to any preceding claim, wherein the printer is a digital printer.

15. A system according to claim 14, wherein the printer also functions as a photocopier.

16. A system according to claim 14 or claim 15, wherein the printer is an inkjet printer, a LED printer, a LCD printers, or a liquid electrophotographic printers.

17. A system according to any one of claims 14 to 16, wherein the printer has a resolution approximately between 600 and 1200dpi.

18. A system according to any preceding claim, wherein the dots are printed in IR absorbing ink.

19. A system according to any preceding claim, adapted to print the location pattern without human-discernible content.

20. A system according to any one of claims 1 to 19, adapted to print the location pattern and human-discernible content on the same carrier.

21. A method of generating a location pattern comprising a plurality of dots, comprising the steps of:
determining the nominal position of the dots in a pattern area; and,
assigning an asymmetrical shape to at least some of the dots in the pattern area, in dependence upon the characteristics of given printer, such that when printed, the optical centre of gravity of those dots substantially coincides with the corresponding nominal positions.

22. A method according to claim 21, further comprising the step of requesting pattern information from a pattern database.

23. A method according to claim 20 or claim 21, further comprising the steps of:
determining characteristics of the printer; and,
determining whether or not the assigning step is required.

24. A method according to any one of claims 21 to 25, further comprising the step of generating a print file of the pattern area, comprising at least some dots having the assigned asymmetrical shape.

25. A method according to claim 24, further comprising the step of printing the print file on the given printer.

26. A method according to any one of claims 21 to 25, comprising the step of explicitly defining the shape of the at least some of the dots in the native resolution of the printer.

27. A method according to any one of claims 21 to 26, wherein the shape of the at least some of the dots is defined using any one of a bit map, a font set, or a high level programming language.

28. A computer program or a printer driver comprising program code means for performing the method steps of any one of claims 21 to 27 when the program is run on a computer and/or other processing means associated with suitable apparatus.

29. A printer system comprising a printer and adapted to print a location pattern comprising a plurality of dots, the system being arranged to introduce an asymmetry into the shape of at least some of dots prior to printing the pattern.

30. A printer system adapted to print a location pattern comprising a plurality of dots each offset from a nominal position in one of a plurality of directions, the system being arranged to modify the degree of offset of each dot from its nominal position by modifying the shape of each dot.

31. A printer system adapted to print a location pattern comprising a plurality of dots, the dots having a first dimension lying between predetermined limits and each dot having an optical centre of gravity located at a predetermined nominal positions in the pattern, the system being adapted to modify the pattern prior to printing by introducing an asymmetry to the dot shape of selected dots, substantially without causing the first dimension to exceed its predetermined limits, such that when printed on a pre-selected printer the optical centre of gravity of the selected dots more closely coincides with their corresponding nominal positions.

32. A location pattern arranged for use with a system comprising a pattern space having a plurality of dots each having a nominal position, the pattern having a plurality of dots, at least some of which having an asymmetric shape, having no more than one axis of symmetry, the asymmetric shape causing the optical centre of gravity of those dots to be located substantially at the corresponding predetermined nominal position.
